# EUROPEAN PATENT SPECIFICATION

(11) **EP 3 321 480 B1**
(45) Date of publication and mention of the grant of the patent: **16.10.2019**
(21) Application number: 17178554.6
(22) Date of filing: 29.06.2017
(51) Int. Cl.: F01M 1/02, F01M 11/02, B62K 25/28, B62K 11/10

(54) **STRADDLED VEHICLE**
GRÄTSCHSITZFAHRZEUG
VÉHICULE À ENFOURCHER

(30) Priority: 09.11.2016 JP 2016219081
(43) Date of publication of application: 16.05.2018
(73) Proprietor: Yamaha Hatsudoki Kabushiki Kaisha, Iwata-shi Shizuoka 438-8501 (JP)
(72) Inventor: YUIZONO, Jun, Iwata-shi, Shizuoka 438-8501 (JP); KAYAMA, Jin, Iwata-shi, Shizuoka 438-8501 (JP); OTA, Kosuke, Iwata-shi, Shizuoka 438-8501 (JP); MIYOSHI, Nobuyuki, Iwata-shi, Shizuoka 438-8501 (JP)
(74) Representative: Grünecker Patent- und Rechtsanwälte PartG mbB

(56) References cited:
- DE-A1-102016 001 225
- JP-A- 2006 044 438
- US-A1- 2004 245 050

## Description

The present invention relates to a straddled vehicle that includes a unit-swing type engine including a scavenge pump.

Closest prior art document US 2004/0245050 A1 discloses a dry-sump lubrication type four-stroke cycle engine. The interior of a crankcase is divided into a front crank chamber and a rear transmission chamber by a partition wall of a given height. A lower part of the transmission case is used as an oil reservoir chamber for reserving lubricating oil. Opposite ends of the crankcase are covered with covers to form a generator chamber and a clutch chamber. The crank chamber is connected to the generator chamber by a drain passage to drain oil collected in the crank chamber into the generator chamber. A scavenging pump placed in the clutch chamber sucks the oil collected in the generator chamber through an oil passage extending across the crankcase under the crank chamber and discharges the oil into an air space in the clutch chamber. An oil feed pump and the scavenge pump are disposed coaxially within the clutch chamber.

A unit-swing type engine (a power unit) having a dry-sump type lubrication device is sometimes used in a motorcycle such as a scooter. For example, in JP 4467377 B2, the unit-swing type power unit having the dry-sump type lubrication device is described. In the power unit, oil and gas collected by a scavenge pump are led to an oil tank, so that the oil and the gas are separated from each other. The oil stored in the oil tank is supplied to each portion in the engine such as a crankshaft by a feed pump.

In the power unit described in JP 4467377 B2, the oil tank is provided at a position further rearward than the crankshaft. Thus, a dimension of the power unit in a front-and-rear direction is increased. A drive wheel (a rear wheel) is provided at a position further rearward than the oil tank. In this case, it is necessary to reduce an outer diameter of the drive wheel in order to prevent interference between the drive wheel and the oil tank. Alternatively, it is necessary to more sufficiently increase a distance between the crankshaft and a support shaft of the drive wheel. Thus, flexibility in design of the motorcycle is restricted.

It is considered that the oil tank is provided at a position further downward than the crankshaft in order for the outer diameter of the drive wheel to be more largely set while the distance between the crankshaft and the drive wheel is reduced. In this case, because a dimension of the unit-swing type engine in a top-and-bottom direction is increased, a height of another member such as a seat is increased. As a result, the size of the motorcycle is increased in the top-and-bottom direction. In the case where an increase in dimension of the unit-swing type engine in the top-and-bottom direction is inhibited, it is difficult to increase the dimension of the oil tank in the top-and-bottom direction. Thus, it is difficult to separate the oil and the gas collected by the scavenge pump from each another in the oil tank. As a result, the oil cannot be sufficiently supplied to each portion in the unit-swing type engine.

An object of the present invention is to provide a straddle vehicle in which oil can be sufficiently supplied to an inside of a unit-swing type engine and which includes the compact unit-swing type engine.

According to the present invention said object is solved by a straddle vehicle having the features of independent claim 1. Preferred embodiments are laid down in the dependent claims.
(1) A straddled vehicle according to one aspect includes a body frame, a rear wheel, and a unit-swing type engine supported at the body frame to be swingable in a top-and-bottom direction together with the rear wheel, wherein the unit-swing type engine includes a crankcase that stores a crankshaft, a scavenge pump that collects oil in the crank chamber such that an inside of the crank chamber of the crankcase has a negative pressure, and a feed pump that supplies the oil collected by the scavenge pump to the crankshaft, the scavenge pump and the feed pump are arranged in the crankcase, the rear wheel is provided at a position further rearward than the crankshaft in a front-and-rear direction of a vehicle, the crankcase includes a flow path forming portion that forms an oil flow path for leading the oil discharged from an oil discharge port of the scavenge pump to an oil inlet port of the feed pump, the flow path forming portion includes a partition wall that sections a space located at a position further downward than the crankshaft into a first flow path space and a second flow path space and is provided at a position further downward than the crankshaft, the partition wall is formed such that the first flow path space and the second flow path space are arranged in a vehicle width direction, and one or a plurality of communication holes that form part of the oil flow path are provided in the partition wall.

In the straddled vehicle, the unit-swing type engine is supported at the body frame. In this state, the unit-swing type engine is swingable in the top-and-bottom direction together with the rear wheel. The rear wheel is rotated by the motive power of the unit-swing type engine. In the unit-swing type engine, the oil in the crank chamber is collected by the scavenge pump in the crankcase such that the inside of the crank chamber has a negative pressure. Thus, an occurrence of a pumping loss in the unit-swing type engine can be inhibited.

When the oil is collected by the scavenge pump, the gas in the crank chamber is sucked together with the oil. Therefore, the gas is included in the oil discharged from the oil discharge port of the scavenge pump. The oil discharged from the oil discharge port of the scavenge pump is led to the oil inlet port of the feed pump through the oil flow path formed by the flow path forming portion of the crankcase in the crankcase.

The gas in the collected oil is separated from the oil as the oil flows through the oil flow path. The above-mentioned oil flow path is formed at a position further downward than the crankshaft by the first flow path space and the second flow path space sectioned by the partition wall and the one or plurality of communication holes formed in the partition wall. In this case, the length of the oil flow path from the oil discharge port of the scavenge pump to the oil inlet port of the feed pump can be sufficiently increased as compared to the case where the partition wall is not present. Further, the first flow path space and the second flow path space are arranged in the vehicle width direction with the partition wall interposed therebetween. In this case, the flow of the oil between the first flow path space and the second flow path space is unlikely to be affected by the inclination of the straddled vehicle in the vehicle width direction. Therefore, the flow of the oil in the oil flow path is stabilized regardless of the travel condition of the straddled vehicle. Therefore, the gas in the collected oil can be sufficiently separated from the oil in the oil flow path. Therefore, a sufficient amount of oil is more efficiently supplied to the crankshaft by the feed pump.

In this manner, in the above-mentioned configuration, it is not necessary to provide an oil tank for separating gas and liquid from each other at a position further downward or further rearward than the crankshaft. Further, the flow path forming portion is located at a position further downward than the crankshaft. Therefore, an outer diameter of the rear wheel can be more largely set while a distance between the crankshaft and the rear wheel is reduced. Further, an increase in dimension of the unit-swing type engine in the top-and-bottom direction can be inhibited.

As a result, the oil can be sufficiently supplied to the inside of the unit-swing type engine, and the compact unit-swing type engine can be realized.
(2) The scavenge pump may be arranged at a position further downward than the crankshaft in a vehicle side view.
   In this case, the oil that flows below the crankshaft in the crank chamber can be easily collected by the scavenge pump.
(3) A first guide flow path that guides oil in the crank chamber to an oil inlet port of the scavenge pump may be provided in the flow path forming portion, a guide surface that, at a position further downward than the crankshaft, guide the oil in the crank chamber to the first guide flow path may be provided in the crankcase, and the guide surface may be formed to incline in a cross section orthogonal to the vehicle width direction.
   In this case, the oil that splashes from the crankshaft in the crank chamber is smoothly guided to the oil inlet port of the scavenge pump through the guide surface and the first guide flow path.
(4) The first guide flow path may be located at a position further downward than the crank chamber to overlap with the crank chamber in a plan view of the vehicle.
   In this case, because the first guide flow path is not located at a position further rearward than the crank chamber, an outer diameter of the rear wheel can be more largely set while a distance between the crankshaft and the rear wheel is reduced.
(5) The flow path forming portion may further include a flat plate-shaped strainer arranged at a boundary between the crank chamber and the first guide flow path.
   In this case, contaminants in the oil guided to the scavenge pump can be removed with a simple and compact configuration.
(6) The flow path forming portion may include a splash portion that splashes and drops the oil discharged from the scavenge pump.
   In this case, when the oil collides with the splash portion, and when the oil falls from the splash portion, the gas in the oil is separated from the oil. Therefore, a large part of the gas in the oil discharged from the scavenge pump can be separated with a simple configuration.
(7) The first flow path space may include a plurality of first flow path chambers, the second flow path space may include a plurality of second flow path chambers, and the oil flow path may be formed to connect the plurality of first flow path chambers and the plurality of second flow path chambers to one another.
   In this case, the length of the oil flow path from the oil discharge port of the scavenge pump to the oil inlet port of the feed pump can be more sufficiently increased. Therefore, the gas in the collected oil can be sufficiently separated from the oil in the oil flow path.
(8) The flow path forming portion may further include one or a plurality of first partition portions that section an inside of the first flow path space into the plurality of first flow path chambers, and one or a plurality of second partition portions that section an inside of the second flow path space into the plurality of second flow path chambers, at least one first hole that connects at least part of the plurality of first flow path chambers to one another may be formed in at least part of the first partition portion, at least one second hole that connects at least part of the plurality of second flow path chambers to one another may be formed in at least part of the second partition portion, the one or plurality of communication holes may include at least one third hole that connects at least part of the first flow path chambers and at least part of the second flow path chambers to each other, and the oil flow path may be formed by the plurality of first flow path chambers, the plurality of second flow path chambers, the first hole, the second hole and the third hole.
   In this case, the length of the oil flow path from the oil discharge port of the scavenge pump to the oil inlet port of the feed pump can be more sufficiently increased with a simple configuration.
(9) A second guide flow path for guiding oil that has flown between the first flow path space and the second flow path space through the one or plurality of communication holes to an oil inlet port of the feed pump may further be provided in the flow path forming portion, and an upstream end of the second guide flow path may be located at a position further downward than the crank chamber to overlap with the crank chamber in a plan view of the vehicle.
   In this case, the oil from which the gas has been separated is guided to the oil inlet port of the feed pump through the second guide path by passing through the one or plurality of communication holes of the partition wall. Thus, the oil from which the gas is separated is supplied to the crankshaft by the feed pump. Further, because the upstream end of the second guide flow path is not located at a position further rearward than the crank chamber, the outer diameter of the rear wheel can be more largely set while a distance between the crankshaft and the rear wheel is reduced.
(10) The unit-swing type engine may further include a cooling pump, and the scavenge pump, the feed pump and the cooling pump may be provided to overlap with one another in a vehicle side view and may be driven by a common drive shaft that is rotated by a rotational force of the crankshaft.

In this case, it is not necessary to independently prepare drive systems respectively corresponding to the scavenge pump, the feed pump and the cooling pump. Therefore, the number of components of the unit-swing type engine is reduced, and the arrangement of the scavenging pump, the feed pump and the cooling pump can be compact.

### BRIEF DESCRIPTION OF THE SEVERAL VIEWS OF THE DRAWING

- Fig. 1: is a schematic side view showing a schematic configuration of a motorcycle according to one embodiment;
- Fig. 2: is a plan view for explaining an outline of a configuration of a unit-swing type engine;
- Fig. 3: is a right side view of a front half portion of the unit-swing type engine of Fig. 2;
- Fig. 4: is a partially enlarged plan view of the unit-swing type engine for mainly explaining a positional relationship between a crank chamber and a flow path space;
- Fig. 5: is a left side view of a generator cover of Fig. 2;
- Fig. 6: is a right side view of a right crank chamber case of Fig. 2;
- Fig. 7: is a left side view of the right crank chamber case of Fig. 2;
- Fig. 8: is a right side view showing a front half portion of a left crank chamber case of Fig. 2;
- Fig. 9: is a cross sectional view taken along the line A-A of the unit-swing type engine of Fig. 3;
- Fig. 10: is a cross sectional view taken along the line B-B of the unit-swing type engine of Fig. 3; and
- Fig. 11: is a cross sectional view taken along the line C-C of the unit-swing type engine of Fig. 3.

### DESCRIPTION OF THE PREFERRED EMBODIMENTS

A straddle vehicle according to one embodiment will be described below with reference to the drawings. In the following description, a motorcycle will be described as one example of the straddled vehicle.

### [1] Schematic Configuration of Motorcycle

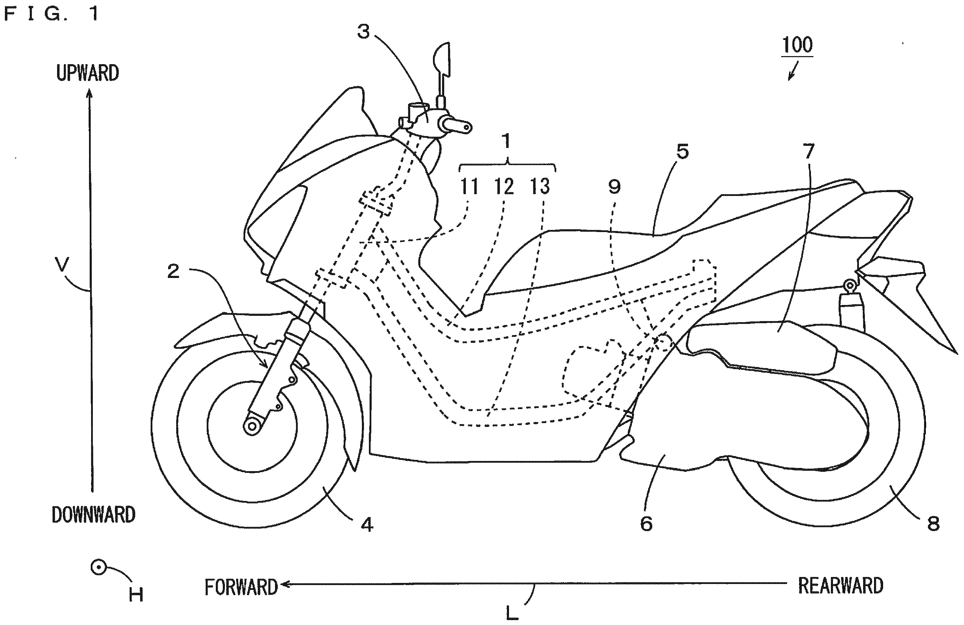

Fig. 1 is a schematic side view showing a schematic configuration of the motorcycle according to the one embodiment. In Fig. 1, the motorcycle 100 is shown standing up to be perpendicular to the road surface. In Fig. 1 and part of subsequent given diagrams, arrows suitably indicate a front-and-rear direction L, a width direction H and a top-and-bottom direction V of the motorcycle 100. In the following description, a direction in which an arrow is directed in the front-and-rear direction L is referred to as forward, and its opposite direction is referred to as rearward. A direction in which an arrow is directed in the width direction H is referred to as leftward, and its opposite direction is referred to as rightward. Further, a direction in which an arrow is directed in the top-and-bottom direction V is referred to as upward, and its opposite direction is referred to as downward.

The motorcycle 100 of Fig. 1 includes a body frame 1. The body frame 1 mainly includes a head pipe 11, an upper frame 12 and a lower frame 13. The upper frame 12 is formed to extend rearward from a position in the vicinity of an upper end of the head pipe 11 while being curved in the top-and-bottom direction V. At a position downward than the upper frame 12, the lower frame 13 extends rearward from a position in the vicinity of a lower end of the head pipe 11. More specifically, a front half portion of the lower frame 13 extends obliquely rearward and downward from the position in the vicinity of the lower end of the head pipe 11 by a predetermined distance and is curved rearward. A rear half portion of the lower frame 13 extends obliquely rearward and upward from the front half portion of the lower frame 13 and is connected to a rear end of the upper frame 12.

A front fork 2 is provided at the head pipe 11 to be swingable in the width direction H. A handle 3 is attached to an upper end of the front fork 2, and a front wheel 4 is rotatably attached to a lower end of the front fork 2.

A seat 5 is provided at a position further upward than a rear half portion of the upper frame 12 to extend in the front-and-rear direction L. A unit-swing type engine 6 is provided at a position in the vicinity of a rear end of the body frame 1 to further extend rearward from the rear half portion of the lower frame 13. An air cleaner 7 is provided on the unit-swing type engine 6. A rear wheel 8 is rotatably attached to a position in the vicinity of a rear end of the unit-swing type engine 6. The rear wheel 8 is rotated by motive power generated by the unit-swing type engine 6.

The unit-swing type engine 6 is supported at the body frame 1 via a pivot shaft 9. In this state, the unit-swing type engine 6 is swingable about the pivot shaft 9 in the top-and-bottom direction V together with the rear wheel 8.

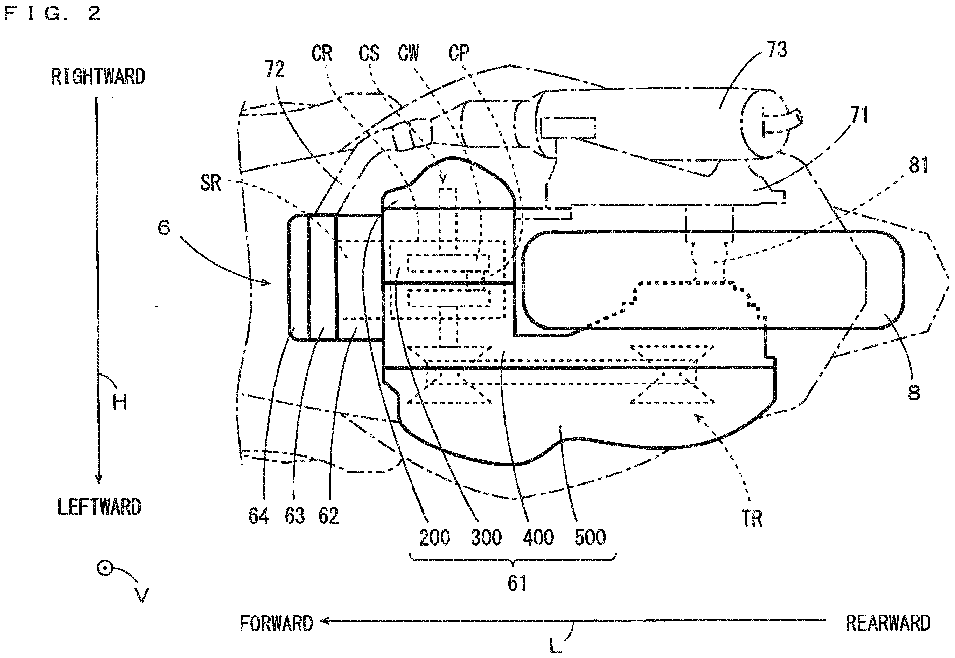

Fig. 2 is a plan view for explaining an outline of a configuration of the unit-swing type engine 6. Fig. 2 mainly shows the plan view of the unit-swing type engine 6 and the rear wheel 8. Further, in Fig. 2, one-dot and dash lines indicate the appearance of a rear half portion of the motorcycle 100.

As shown in Fig. 2, the unit-swing type engine 6 includes a crankcase 61, a cylinder 62, a cylinder head 63 and a head cover 64. The crankcase 61 is formed to extend in the width direction H at a position further forward than the rear wheel 8 and extend in the front-and-rear direction L at a position further leftward than the rear wheel 8.

The cylinder 62 is provided at a front end of the crankcase 61. Further, the cylinder head 63 is provided at a front end of the cylinder 62. Further, the head cover 64 is provided at a front end of the cylinder head 63.

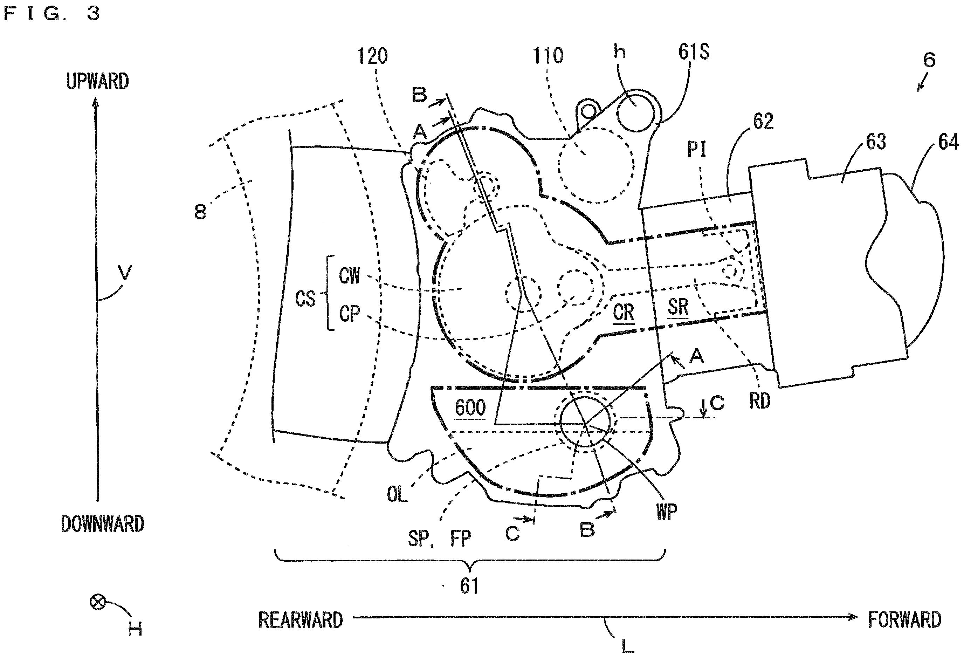

In the crankcase 61, a crankshaft CS is stored in a portion located at a position further forward than the rear wheel 8. The crankshaft CS extends in the width direction H in the crankcase 61. In the crankcase 61, a crank chamber CR that stores a crank web CW and a crank pin CP of the crankshaft CS and a balancer 120 (Fig. 3), described below, is formed. The crank chamber CR communicates with a cylinder chamber SR in the cylinder 62. In a portion of the crankcase 61 located at a position further leftward than the rear wheel 8, a belt-type Continuously Variable Transmission (CVT) is stored.

A swingarm 71 is connected to a right end of the crankcase 61 to extend in the front-and-rear direction L at a position further rightward than the rear wheel 8. A support shaft 81 that supports the rear wheel 8 is provided between a rear end of the crankcase 61 and a rear end of the swingarm 71. One end of an exhaust pipe 72 is connected to the cylinder head 63. The exhaust pipe 72 extends rightward and rearward from the cylinder head 63. The other end of the exhaust pipe 72 is connected to a silencer 73.

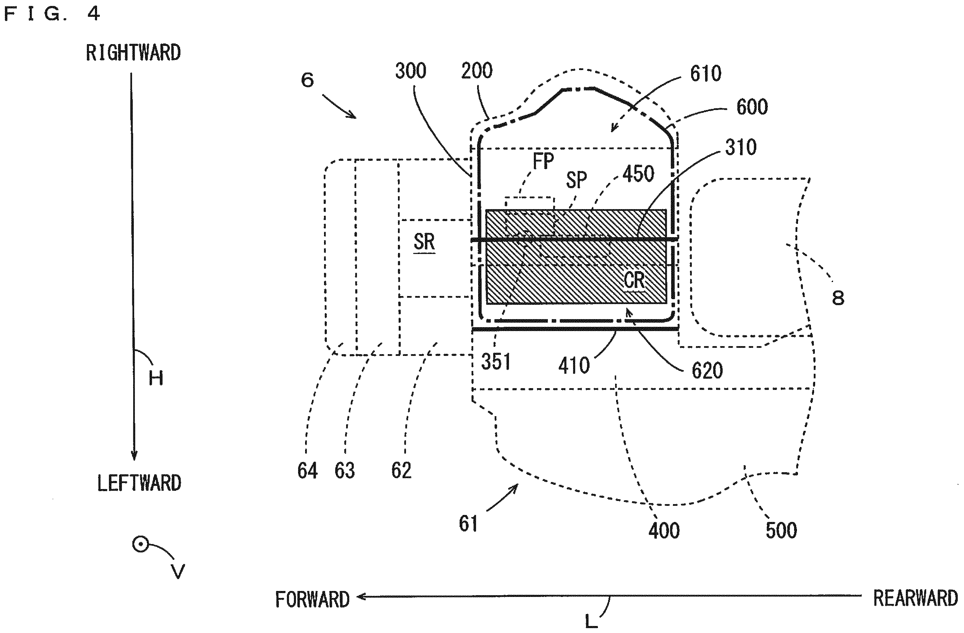

The crankcase 61 is mainly constituted by a generator cover 200, a right crank chamber case 300, a left crank chamber case 400 and a transmission cover 500. The generator cover 200 is located at the right end of the crankcase 61 and provided to cover a generator GN (Fig. 4), described below, together with a right end of the crankshaft CS from the right. The transmission cover 500 is located at the left end of the crankcase 61 and provided to cover the belt-type Continuously Variable Transmission TR together with a left end of the crankshaft CS from the left. The right crank chamber case 300 and the left crank chamber case 400 are located between the generator cover 200 and the transmission cover 500, and form the crank chamber CR.

An oil supply system including a scavenge pump SP (Fig. 4) and a feed pump FP (Fig. 4), described below, is employed for the above-mentioned unit-swing type engine 6.

### [2] Schematic Configuration of Front Half Portion of Unit-swing Type Engine

Fig. 3 is a right side view of the front half portion of the unit-swing type engine 6 of Fig. 2. As shown in Fig. 3, a suspension portion 61S is provided at a front upper end of the crankcase 61. The pivot shaft 9 of Fig. 1 is inserted into a hole h of the suspension portion 61S. A starter motor 110 is provided at a portion in the vicinity of the suspension portion 61S in the crankcase 61.

In a front half portion of the crankcase 61, the crankshaft CS, the balancer 120, the scavenge pump SP and the feed pump FP are mainly provided. The crankshaft CS is provided at a substantially center portion of the crankcase 61 in the top-and-bottom direction V. In a vehicle side view, the balancer 120 is provided at a position obliquely further rearward and upward than the crankshaft CS. The crank pin CP of the crankshaft CS is coupled to a piston PI provided in the cylinder chamber SR in the cylinder 62 via a connecting rod RD.

As described above, in the crankcase 61, the crank chamber CR storing the balancer 120 together with the crank web CW and the crank pin CP of the crankshaft CS is formed. The rear wheel 8 is provided at a position further rearward than the crankshaft CS to be opposite to a back surface portion of the crankcase 61 that forms a rear end of the crank chamber CR.

At a position further downward than the crank chamber CR in the vehicle side view, a flow path space 600 for allowing oil OL to circulate in the unit-swing type engine 6 is formed. In the flow path space 600, an oil flow path that leads the oil OL discharged from an oil discharge port of the scavenge pump SP to an oil inlet port of the feed pump FP is formed.

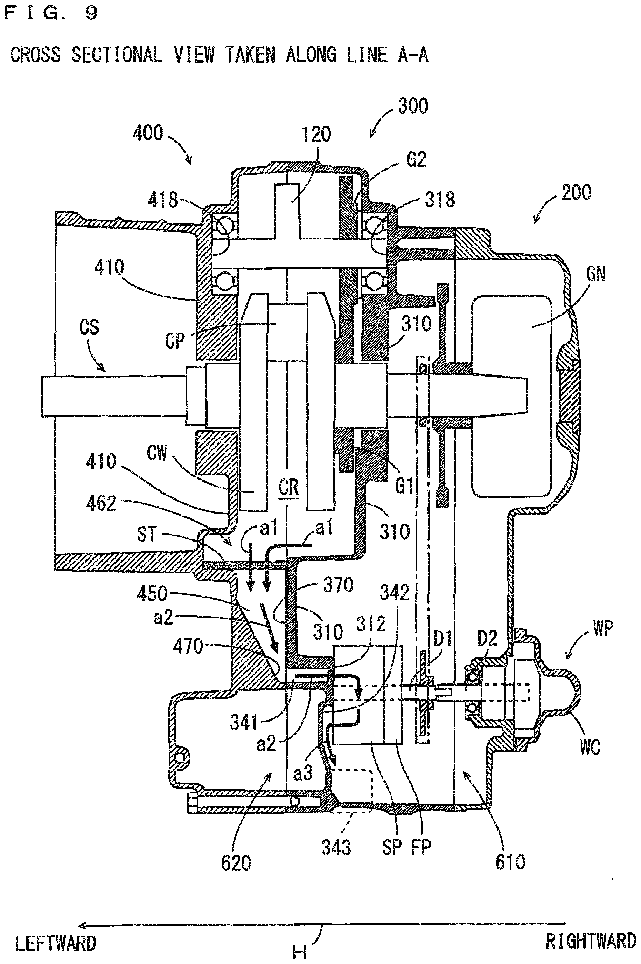

In Fig. 3, thick one-dot and dash lines indicate outer shapes of the cylinder chamber SR, the crank chamber CR and the flow path space 600. The scavenge pump SP and the feed pump FP are provided in the flow path space 600 to be located at positions further downward than the crankshaft CS. In the present embodiment, the scavenge pump SP and the feed pump FP have a common drive shaft D1 (Fig. 9) and are arranged to overlap with each other in the vehicle side view. In a right side portion of the crankcase 61, a water pump WP is provided at a position overlapping with the scavenge pump SP and the feed pump FP in the vehicle side view. The water pump WP allows a cooling water to circulate between the unit-swing type engine 6 and a radiator (not shown).

Fig. 4 is a partially enlarged plan view of the unit-swing type engine 6 for mainly explaining a positional relationship between the crank chamber CR and the flow path space 600. In Fig. 4, dotted lines indicate the appearance of each portion of the unit-swing type engine 6 and the rear wheel 8.

As indicated by hatching in Fig. 4, the crank chamber CR is located at a position substantially the center of the crankcase 61 in the width direction H. The flow path space 600 is located at a position further downward than the crank chamber CR to overlap with the crank chamber CR in the plan view of the vehicle.

Partition walls 310, 410 orthogonal to the width direction H are respectively provided in the right crank chamber case 300 and the left crank chamber case 400. The flow path space 600 is formed between the generator cover 200 and the partition wall 410 of the left crank chamber case 400. The partition wall 310 of the right crank chamber case 300 sections the above-mentioned flow path space 600 into a right flow path space 610 and a left flow path space 620. The right flow path space 610 and the left flow path space 620 are arranged in the width direction H. The scavenge pump SP and the feed pump FP are located in the right flow path space 610.

Details of configurations of the generator cover 200, the right crank chamber case 300 and the left crank chamber case 400 that constitute the above-mentioned crank chamber CR, the right flow path space 610 and the left flow path space 620 will be described below.

### [3] Generator Cover

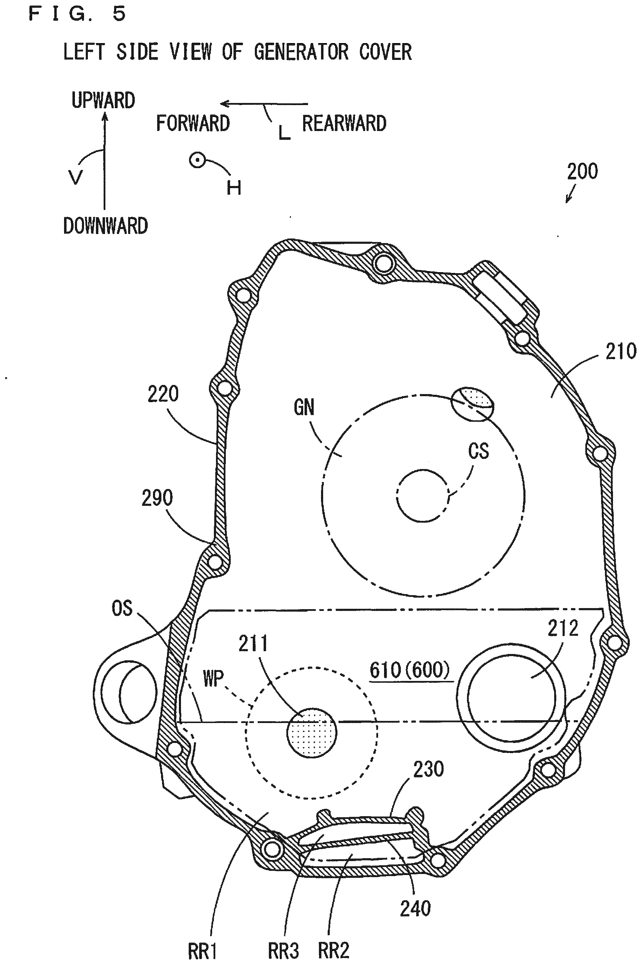

Fig. 5 is a left side view of the generator cover 200 of Fig. 2. As shown in Fig. 5, the generator cover 200 has a right outer wall 210 that extends in the top-and-bottom direction V. A peripheral wall 220 that extends leftward from the right outer wall 210 is formed at an outer edge of the right outer wall 210 to surround the right outer wall 210. A left end surface of the peripheral wall 220 is to be a connection surface 290 connected to the right crank chamber case 300 of Fig. 2. In Fig. 5, hatching is applied to the connection surface 290 in order to facilitate understanding of the shape of the connection surface 290. Further, a dotted pattern is applied to portions of the right outer wall 210 that are penetrated by through holes in the width direction H in order to facilitate understanding of the shape of the generator cover 200.

In the generator cover 200, in the vehicle side view, a right end of the crankshaft CS and the generator GN are arranged at a position slightly further upward than a center portion of the generator cover 200. In the right outer wall 210, a through hole 211 is formed at a position further downward than the crankshaft CS and the generator GN and further forward than the crankshaft CS in the vehicle side view. The water pump WP is provided at an outer surface (a right surface) of the right outer wall 210 to overlap with the through hole 211. A drive shaft D2 (Fig. 9), described below, for driving the water pump WP is inserted into the through hole 211.

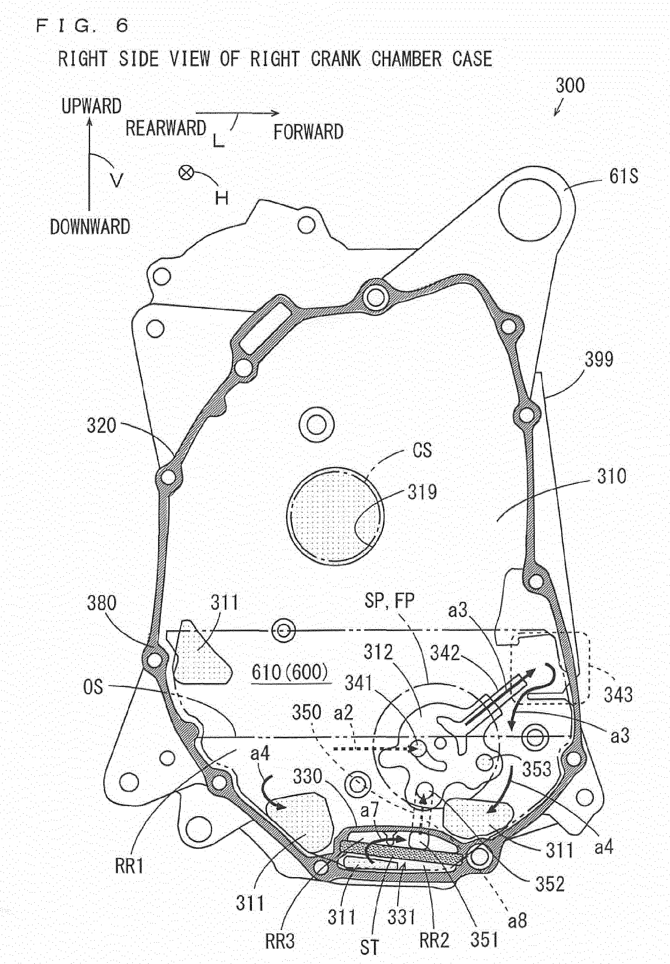

In the right outer wall 210, an oil window 212 is provided at a position further downward than the crankshaft CS and the generator GN and further rearward than the through hole 211 in the vehicle side view. With the generator cover 200 and the right crank chamber case 300 of Fig. 2 connected to each other, the right flow path space 610 of Fig 4 is formed by the generator cover 200 and the right crank chamber case 300. The right flow path space 610 is located at a position further downward than the crankshaft CS. In the right flow path space 610, the oil OL in the unit-swing type engine 6 flows while a substantially constant amount of the oil OL is stored. In Fig. 5, and Fig. 6 that is described below, two-dots and dash lines indicate the right flow path space 610 and an oil surface OS.

An upper partition portion 230 and a lower partition portion 240 are formed in the vicinity of a lower end of the peripheral wall 220. The upper partition portion 230 is located at a position further upward than the lower partition portion 240. A space that opens leftward is formed between the lower partition portion 240 and the lower end of the peripheral wall 220, and another space that opens leftward is formed between the lower partition portion 240 and the upper partition portion 230.

### [4] Right Crank Chamber Case

Fig. 6 is a right side view of the right crank chamber case 300 of Fig. 2. As shown in Fig. 6, the right crank chamber case 300 has the partition wall 310 that extends in the top-and-bottom direction V. The suspension portion 61S is formed to extend upward and forward from an upper end of the partition wall 310. A cylinder connection portion 399 is formed to project forward from a front end of the partition wall 310.

A right peripheral wall 320 extending rightward from the partition wall 310 is formed at an outer edge of the partition wall 310 to surround the partition wall 310. A right end surface of the right peripheral wall 320 is to be a right connection surface 380 connected to the generator cover 200 of Fig. 2. As shown in Figs. 5 and 6, part of the connection surface 290 of the generator cover 200 and part of the right connection surface 380 of the right crank chamber case 300 have substantially the same shape. In Fig. 6, hatching is applied to the right connection surface 380 in order to facilitate understanding of the shape of the right connection surface 380. Further, the dotted pattern is applied to portions of the partition wall 310 penetrated by through holes in the width direction H in order to facilitate understanding of the shape of the right crank chamber case 300.

A crankshaft insertion hole 319 is formed at a position substantially the center of the partition wall 310 in the vehicle side view. A crank journal of the crankshaft CS is inserted into the crankshaft insertion hole 319.

As described above, the right flow path space 610 is formed at a position further downward than the crankshaft CS with the generator cover 200 and the right crank chamber case 300 connected to each other. In the partition wall 310, a plurality (four in the present example) of communication holes 311 are formed. The plurality of communication holes 311 form the oil flow path for allowing the oil OL to flow between the right flow path space 610 and the left flow path space 620 of Fig. 4.

In part of the partition wall 310, a pump attachment portion 312 is formed at a position further downward and forward than the crankshaft insertion hole 319 to overlap with the right flow path space 610 in the vehicle side view. The scavenge pump SP and the feed pump FP are attached to the pump attachment portion 312.

The scavenge pump SP collects the oil OL in the crank chamber CR and discharges the collected oil OL to the right flow path space 610 such that the inside of the crank chamber CR of Figs. 2 and 3 has a negative pressure. The discharged oil OL flows in the right flow path space 610 and the left flow path space 620 of Fig. 4. The feed pump FP supplies the oil OL that has flowed in the right flow path space 610 and the left flow path space 620 to each portion in the unit-swing type engine 6 including the crankshaft CS.

An inlet hole 341, a discharge groove 342, a passage opening 352 and a discharge hole 353 are formed in the pump attachment portion 312. The inlet hole 341 is formed to guide the oil OL led at a position further leftward than the partition wall 310 from the crank chamber CR to an oil inlet port of the scavenge pump SP.

In the right flow path space 610, a splash portion 343 is formed at an inner surface at a front end of the right peripheral wall 320 to be located at a position further upward than the oil surface OS. The discharge groove 342 is formed to lead the oil OL discharged from the oil discharge port of the scavenge pump SP to the splash portion 343. The splash portion 343 is formed to splash and drop the oil OL led from the discharge groove 342.

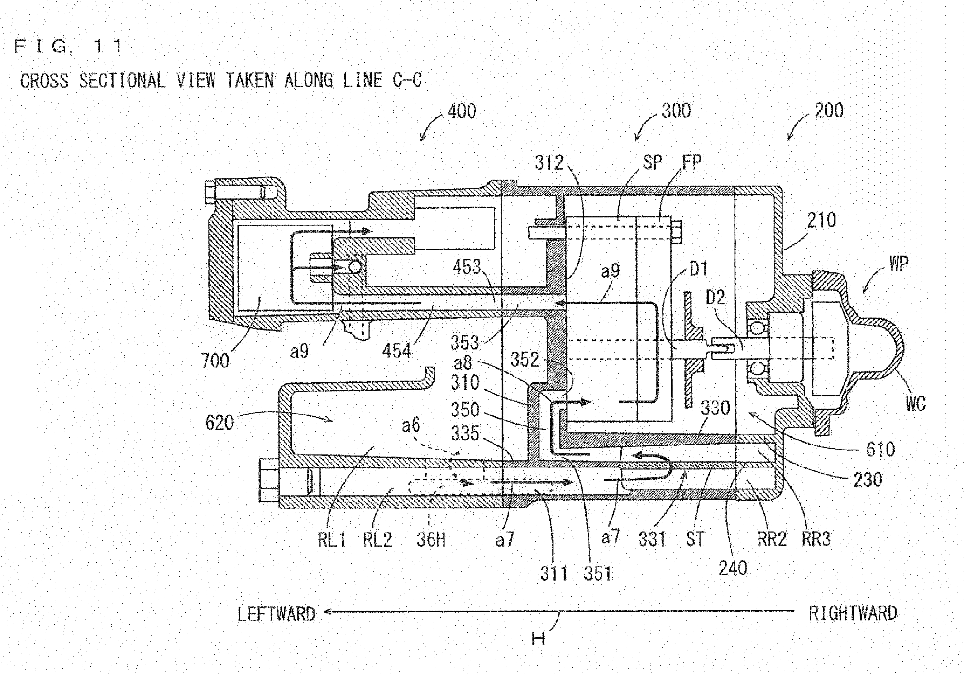

A guide passage 350 is formed inside of the partition wall 310 to extend downward from the lower end of the pump attachment portion 312 as part of the oil flow path. The passage opening 352 is formed as a downstream end of the guide passage 350, and is formed to guide the oil OL in a right flow path chamber RR3, described below, in the right flow path space 610 to the oil inlet port of the feed pump FP. The discharge hole 353 is formed to lead the oil OL discharged from the oil discharge port of the feed pump FP to a filter device 700 (Fig. 11), described below.

An upper partition portion 330 is formed in the vicinity of a lower end of the right peripheral wall 320. The upper partition portion 330 is formed to be connectable to the upper partition portion 230 (Fig. 5) of the generator cover 200. In the right crank chamber case 300, a flat plate-shaped strainer ST is provided in a portion corresponding to the lower partition portion 240 of the generator cover 200.

In such a configuration, with the generator cover 200 and the right crank chamber case 300 connected to each other, two right flow path chambers RR2, RR3 arranged in the top-and-bottom direction V are formed between the two upper partition portions 230, 330 (Figs. 5 and 6), and lower ends of the peripheral wall 220 (Fig. 5) and the right peripheral wall 320 (Fig. 6). Further, a right flow path chamber RR1 is formed at a position further upward than the two upper partition portions 230, 330 (Figs. 5 and 6). The right flow path chamber RR2 is located at a position further downward than the right flow path chamber RR3. An installment portion of the strainer ST between the right flow path chamber RR2 and the right flow path chamber RR3 functions as a hole 331 (Fig. 6) for allowing the oil OL to flow between the right flow path chamber RR2 and the right flow path chamber RR3.

In a portion of the partition wall 310 that forms the right flow path chamber RR1, part (three in the present example) of the communication holes 311 among the plurality of communication holes 311 is provided. Further, in a portion of the partition wall 310 that forms the right flow path chamber RR2, a remaining (one in the present example) communication hole 311 among the plurality of communication holes 311 is provided. In a portion of the partition wall 310 that forms the right flow path chamber RR3, a passage opening 351 is provided as an upstream end of the guide passage 350 that guides the oil OL to the feed pump FP.

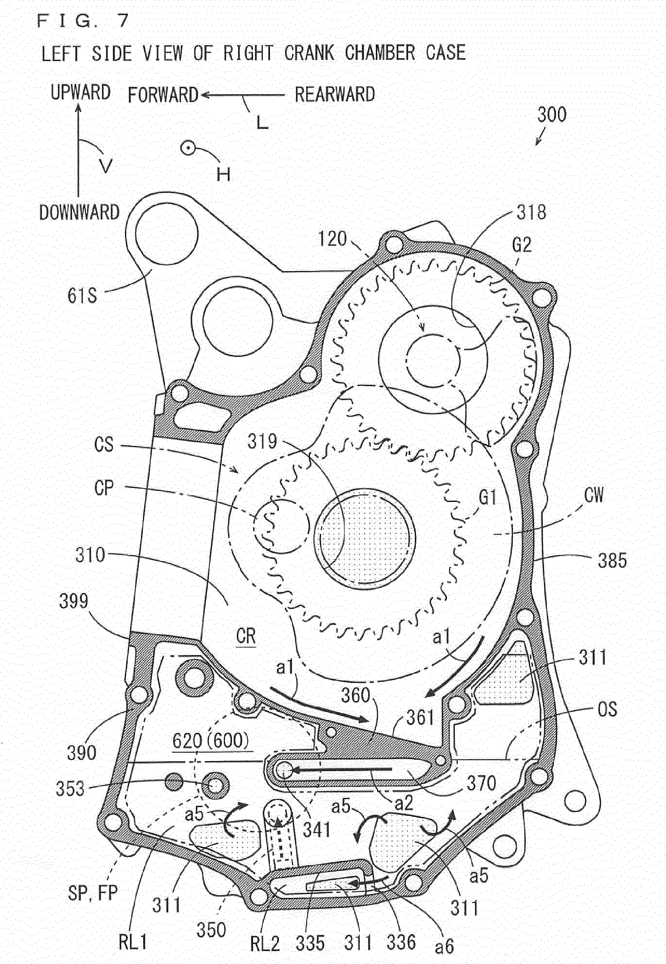

Fig. 7 is a left side view of the right crank chamber case 300 of Fig. 2. As shown in Fig. 7, in a portion of the outer edge of the partition wall 310 except for the cylinder connection portion 399, a left peripheral wall 385 extending leftward from the partition wall 310 is formed. A crank chamber partition wall 360 is formed to extend in the front-and-rear direction L from a lower end of the cylinder connection portion 399 to a substantially center portion of the inner surface at the rear end of the left peripheral wall 385. A left end surface of the left peripheral wall 385 and a left end surface of the crank chamber partition wall 360 are to be a left connection surface 390 connected to the left crank chamber case 400 of Fig. 2. In Fig. 7, hatching is applied to the left connection surface 390 in order to facilitate understanding of the shape of the left connection surface 390. Further, also in Fig. 7, the dotted pattern is applied to portions of the partition wall 310 penetrated by through holes in the width direction H in order to facilitate understanding of the shape of the right crank chamber case 300.

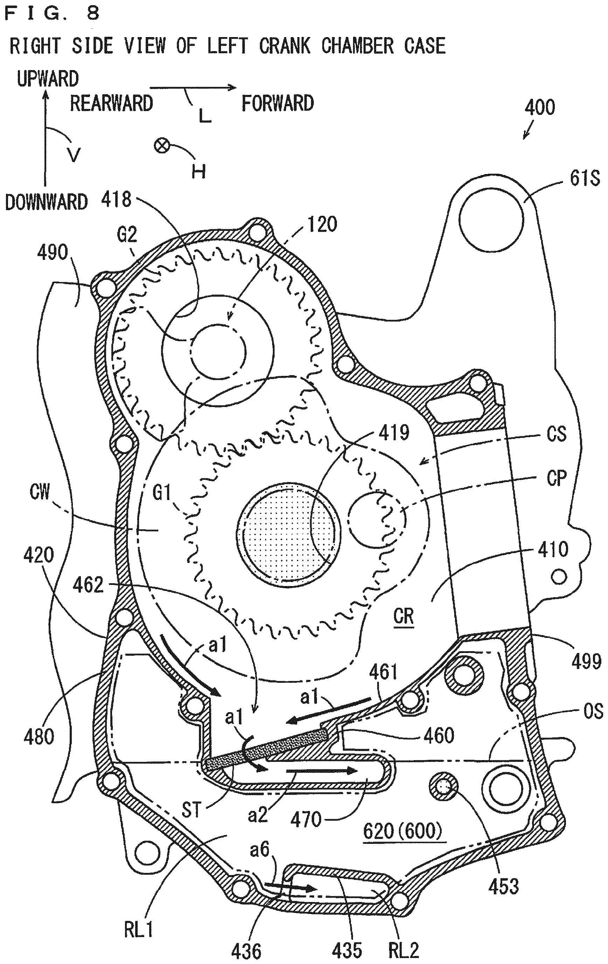

With the right crank chamber case 300 and the left crank chamber case 400 of Fig. 2 connected to each other, the crank chamber CR of Fig. 4 is formed by the right crank chamber case 300 and the left crank chamber case 400. The above-mentioned crank chamber partition wall 360 constitutes a bottom portion of the crank chamber CR. Further, the left flow path space 620 of Fig. 4 is formed at a position further downward than the crank chamber CR. In the left flow path space 620, similarly to the right flow path space 610, the oil OL in the unit-swing type engine 6 flows while a substantially constant amount of the oil OL is stored. In Fig. 7, and Fig. 8 that is described below, two-dots and dash lines indicate the left flow path space 620 and the oil surface OS.

The crank web CW and the crank pin CP of the crankshaft CS are provided together with a gear G1 to overlap with a portion of the partition wall 310 that forms the crank chamber CR in the vehicle side view. Further, the balancer 120 is provided together with a gear G2 to overlap with a portion of the partition wall 310 that forms the crank chamber CR in the vehicle side view.

A balancer supporter 318 is provided in the vicinity of an upper end of the partition wall 310. A right end of the balancer 120 is rotatably supported by the balancer supporter 318. When the unit-swing type engine 6 is operated, a rotational force of the crankshaft CS is transmitted to the balancer 120 via the gear G1 and the gear G2. Thus, the balancer 120 and the crankshaft CS are rotated.

The crank chamber partition wall 360 is formed to extend obliquely downward from a front end of the partition wall 310 to a position slightly further rearward than a center portion of the partition wall 310 in the front-and-rear direction L. Therefore, an upper surface of the crank chamber partition wall 360 inclines with respect to a vertical axis and a horizontal axis in a plane orthogonal to the width direction H. An inclined upper surface of the crank chamber partition wall 360 is referred to as a guide surface 361. The guide surface 361 is formed to guide the oil OL that splashes from the balancer 120 and the crankshaft CS in the crank chamber CR to a guide flow path 450 (Fig. 9), described below. The guide flow path 450 (Fig. 9) is an oil flow path for guiding the oil OL in the crank chamber CR to the scavenge pump SP located at a position further rightward than the partition wall 310.

A guide flow path groove 370 that constitutes part of the guide flow path 450 (Fig. 9), described below, is formed at a center portion of the crank chamber partition wall 360 in the front-and-rear direction L. The above-mentioned inlet hole 341 is formed at a front end of the guide flow path groove 370.

A partition portion 335 is formed in the vicinity of a lower end of the left peripheral wall 385. A space that opens leftward is formed between the partition portion 335 and a lower end of the left peripheral wall 385. A hole forming portion 336 is formed at a rear end of the partition portion 335. The hole forming portion 336 is formed in a concave shape directed leftward.

### [5] Left Crank Chamber Case

Fig. 8 is a right side view showing a front half portion of the left crank chamber case 400 of Fig. 2. As shown in Fig. 8, the left crank chamber case 400 has the partition wall 410 extending in the top-and-bottom direction V. The suspension portion 61S is formed to extend upward and forward from an upper end of the partition wall 410. A cylinder connection portion 499 is formed to project forward from a front end of the partition wall 410. A transmission right cover portion 490 is formed to further extend rearward from a rear end of the partition wall 410.

In a portion of an outer edge of the partition wall 410 except for the cylinder connection portion 499, a right peripheral wall 420 extending rightward from the partition wall 410 is formed. A crank chamber partition wall 460 is formed to extend in the front-and-rear direction L from a lower end of the cylinder connection portion 499 to substantially the center portion of an inner surface at a rear end of the right peripheral wall 420. A right end surface of the right peripheral wall 420 and a right end surface of the crank chamber partition wall 460 are to be a right connection surface 480 connected to the right crank chamber case 300 of Fig. 2. In Fig. 8, hatching is applied to the right connection surface 480 in order to facilitate understanding of the shape of the right connection surface 480. Further, the dotted pattern is applied to portions of the partition wall 410 penetrated by through holes in the width direction H in order to facilitate understanding of the shape of the left crank chamber case 400.

In the partition wall 410, a crankshaft insertion hole 419 is formed at a position substantially the center of the partition wall 410 in the vehicle side view. The crank journal of the crankshaft CS is inserted into the crankshaft insertion hole 419. The balancer supporter 418 is provided in the vicinity of an upper end of the partition wall 410. A left end of the balancer 120 is rotatably supported by the balancer supporter 418. In this state, the crank web CW and the crank pin CP of the crankshaft CS and the gear G1 overlap with a portion of the partition wall 410 that forms the crank chamber CR in the vehicle side view. Further, the balancer 120 and the gear G2 overlap with a portion of the partition wall 410 that forms the crank chamber CR in the vehicle side view.

As described above, with the right crank chamber case 300 and the left crank chamber case 400 connected to each other, the crank chamber CR of Fig. 4 is formed. The above-mentioned crank chamber partition wall 460 and the crank chamber partition wall 360 of the right crank chamber case 300 of Fig. 7 together constitute a bottom portion of the crank chamber CR. Further, the left flow path space 620 of Fig. 4 is formed at a position further downward than the crank chamber CR.

A front portion of the crank chamber partition wall 460 is formed to extend obliquely downward from a front end to the center portion of the partition wall 410 in the front-and-rear direction L. Therefore, an upper surface of the crank chamber partition wall 460 inclines with respect to a vertical axis and a horizontal axis in a plane orthogonal to the width direction H similarly to the crank chamber partition wall 360 of the right crank chamber case 300 of Fig. 7. The inclined upper surface of the crank chamber partition wall 460 is referred to as a guide surface 461. Further, a rear portion of the crank chamber partition wall 460 is formed to extend obliquely forward and downward from substantially the center portion of an inner surface at a rear end of the partition wall 410.

At the center of the crank chamber partition wall 460 in the front-and-rear direction L, an opening 462, which receives the oil OL that flows downward in the crank chamber CR and guides the received oil OL to the guide flow path 450 (Fig. 9), described below, is formed. Further, a guide flow path groove 470 is formed at a position further downward than the opening 462.

In the above-mentioned configuration, with the right crank chamber case 300 of Fig. 7 and the left crank chamber case 400 of Fig. 8 connected to each other, the guide flow path 450 (Fig. 9) is formed by the two guide flow path grooves 370, 470. At the above-mentioned opening 462, the flat plate-shaped strainer ST is provided to be located at a boundary between the crank chamber CR and the guide flow path 450 (Fig. 9).

In a portion of the partition wall 410 that forms the left flow path space 620, an oil supply hole 453 for leading the oil OL discharged from the feed pump FP of Fig. 4 through the discharge hole 353 of Fig. 6 to the filter device 700 (Fig. 11), described below, is formed.

In the vicinity of a lower end of the right peripheral wall 420, a partition portion 435 is formed. The partition portion 435 is formed to be connectable to the partition portion 335 (Fig. 7) of the right crank chamber case 300. Further, at a rear end of the partition portion 435, a hole forming portion 436 corresponding to the hole forming portion 336 formed at the partition portion 335 (Fig. 7) is formed. The hole forming portion 436 is formed in a concave shape directed rightward.

In such a configuration, with the right crank chamber case 300 and the left crank chamber case 400 connected to each other, a left flow path chamber RL2 is formed between the two partition portions 335, 435 (Figs. 7 and 8) and lower ends of the left peripheral wall 385 (Fig. 7) and the right peripheral wall 420 (Fig. 8). Further, a left flow path chamber RL1 is formed at a position further upward than the two partition portions 335, 435 (Figs. 7 and 8).

Further, in the left flow path space 620, a hole 36H (Fig. 11), described below, is formed by the above-mentioned hole forming portions 336, 436 (Figs. 7 and 8) between the two left flow path chambers RL1, RL2.

The communication hole 311 (Fig. 6), provided in a portion of the partition wall 310 of the right crank chamber case 300 that forms the right flow path chamber RR2 (Fig. 6), connects the right flow path chamber RR2 (Fig. 6) and the left flow path chamber RL2 (Fig. 7) respectively located at the lowermost ends of the right flow path space 610 and the left flow path space 620 to each other.

### [6] Flow of Oil Inside of Unit-swing Type Engine

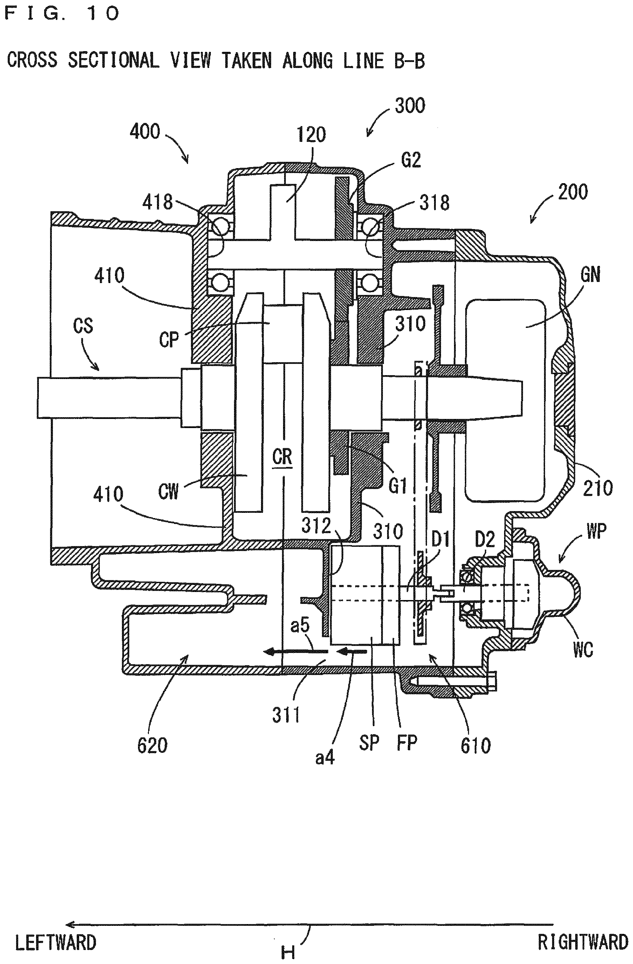

Fig. 9 is a cross sectional view taken along the line A-A of the unit-swing type engine 6 of Fig. 3, Fig. 10 is a cross sectional view taken along the line B-B of the unit-swing type engine 6 of Fig. 3, and Fig. 11 is a cross sectional view taken along the line C-C of the unit-swing type engine 6 of Fig. 3.

As shown in Fig. 9, the scavenge pump SP and the feed pump FP are driven by the common drive shaft D1 that is rotated by the rotational force of the crankshaft CS. Therefore, in the unit-swing type engine 6, an oil supply system is operated by rotation of the crankshaft CS.

The drive shaft D1 is provided to extend rightward from the pump attachment portion 312 of the partition wall 310. The drive shaft D2 of the water pump WP is connected to a right end of the drive shaft D1 to further extend the drive shaft D1 of the scavenge pump SP and the feed pump FP rightward. In this case, because the drive shafts D1, D2 are integrally rotated by the rotational force of the crankshaft CS, it is not necessary to independently prepare drive systems respectively corresponding to the scavenge pump SP, the feed pump FP and the water pump WP. Therefore, the number of components of the unit-swing type engine 6 is reduced, and the arrangement of the scavenge pump SP, the feed pump FP and the water pump WP can be compact.

The flow of the oil OL from the crank chamber CR to the feed pump FP will be described with reference to thick solid arrows and thick dotted arrows shown in Figs. 6 to 11. First, as indicated by arrows a1 in Figs. 7, 8 and 9, the oil OL that splashes from the crankshaft CS and the balancer 120 in the crank chamber CR flows on an inner surface and the guide surface 361 of the left peripheral wall 385 of Fig. 7 and an inner surface and the guide surface 461 of the right peripheral wall 420 of Fig. 8, and is led to the opening 462 of Figs. 8 and 9. Further, the oil OL that has been led to the opening 462 flows into the guide flow path 450 of Fig. 9 through the strainer ST.

In this case, because the guide surfaces 361, 461 incline with respect to a vertical axis and a horizontal axis in a plane orthogonal to the width direction H, the oil OL in the crank chamber CR is smoothly led to the guide flow path 450. At this time, contaminants in the oil OL are removed by the strainer ST having a simple and compact configuration.

Subsequently, as indicated by arrows a2 in Figs. 6, 7, 8 and 9, the oil OL that has been guided to the guide flow path 450 is guided to the oil inlet port of the scavenge pump SP through the guide flow path 450 (Fig. 9) and the inlet hole 341 (Figs. 6, 7 and 9) of the right crank chamber case 300. At this time, in the scavenge pump SP, the gas in the crank chamber CR is sucked together with the oil OL in the crank chamber CR.

As shown in Fig. 9, the guide flow path 450 is formed such that the size of its cross section is gradually reduced from an upstream position to a downstream position. Thus, the oil OL that has been guided to the inside of the guide flow path 450 is more smoothly led to the scavenge pump SP. Further, a large amount of gas is inhibited from flowing from the crank chamber CR to the scavenge pump SP.

The oil OL that has been led to the oil inlet port of the scavenge pump SP is discharged from the oil discharge port of the scavenge pump SP together with the gas. As indicated by arrows a3 in Figs. 6 and 9, the discharged oil OL is led to the splash portion 343 by the discharge groove 342 of the right crank chamber case 300. Further, the oil OL that has been led to the splash portion 343 collides with the inner surface of the right peripheral wall 320 at the splash portion 343 and falls in the right flow path chamber RR1 of the right flow path space 610.

In this case, when the oil OL collides with the inner surface of the right peripheral wall 320 at the splash portion 343, and when the oil OL falls from the splash portion 343, the gas in the oil OL is separated from the oil OL. Thus, a large part of the gas in the oil OL that has been discharged from the scavenge pump SP can be separated from the oil OL with a simple configuration.

Next, as indicated by arrows a4 in Figs. 6 and 10, the oil OL that has been led from the splash portion 343 to the right flow path chamber RR1 flows into the communication hole 311 that connects the right flow path chamber RR1 and the left flow path chamber RL1 to each other. As indicated by arrows a5 in Figs. 7 and 10, the oil OL that flows into the communication hole 311 flows out to the inside of the left flow path chamber RL1 in the left flow path space 620.

Subsequently, as indicated by arrows a6 in Figs. 7, 8 and 11, the oil OL that has been led to the inside of the left flow path chamber RL1 flows into the left flow path chamber RL2 through the hole 36H (Fig. 11) formed by the hole forming portions 336, 436 (Figs. 7 and 8). Further, the oil OL that has flown into the left flow path chamber RL2 further flows into the communication hole 311 that connects the left flow path chamber RL2 and the right flow path chamber RR2 to each other. Thereafter, as indicated by arrows a7 in Figs. 6 and 11, the oil OL that flows into the communication hole 311 flows into the right flow path chamber RR3 through the strainer ST from the right flow path chamber RR2 in the right flow path space 610.

Then, as indicated by arrows a8 in Figs. 6 and 11, the oil OL that has flown into the right flow path chamber RR3 is guided to the oil inlet port of the feed pump FP through the passage opening 351, the guide passage 350 and the passage opening 352.

As indicated by an arrow a9 in Fig. 11, the oil OL discharged from the feed pump FP is led to the filter device 700 through the discharge hole 353 formed in the pump attachment portion 312 and the oil supply hole 453 formed in the left crank chamber case 400. The oil OL that has permeated through the filter device 700 is supplied to each portion in the unit-swing type engine 6 including the above-mentioned crankshaft CS and the balancer 120.

### [7] Effects

(1) In the above-mentioned unit-swing type engine 6, the oil OL in the crank chamber CR is collected by the scavenge pump SP such that the inside of the crank chamber CR in the crankcase 61 has a negative pressure. Thus, an occurrence of a pumping loss in the unit-swing type engine 6 is inhibited. When the oil OL is collected by the scavenge pump SP, the gas in the crank chamber CR is sucked together with the oil OL. Therefore, the gas is included in the oil OL discharged from the scavenge pump SP.

As described above, in the flow path space 600, the plurality of flow path chambers (the right flow path chambers RR1, RR2, RR3 and the left flow path chambers RL1, RL2) are formed by the partition wall 310, the upper partition portions 230, 330, the lower partition portion 240 and the partition portions 335, 435.

The plurality of communication holes 311 and the plurality of holes 36H, 331 are formed to connect the plurality of flow path chambers to one another. The oil flow path from the scavenge pump SP to the feed pump FP is constituted by the plurality of flow path chambers, the plurality of communication holes 311 and the plurality of holes 36H, 331. In the flow path space 600, the oil flow path is bent or curved in the top-and-bottom direction V, the width direction H and the front-and-rear direction L. Thus, the length of the oil flow path from the scavenge pump SP to the feed pump FP can be sufficiently increased.

The oil OL discharged from the scavenge pump SP is led to the feed pump FP through the oil flow path formed by the right flow path chambers RR1, RR2, RR3 and the left flow path chambers RL1, RL2 in the crankcase 61. At this time, the gas in the oil OL collected by the scavenge pump SP is separated from the oil OL as it flows through the oil flow path.

Thus, the gas in the oil OL collected by the scavenge pump SP can be sufficiently separated from the oil OL in the oil flow path. Therefore, a sufficient amount of the oil OL is more efficiently supplied to each portion in the unit-swing type engine 6 by the feed pump FP.

In this manner, in the above-mentioned configuration, it is not necessary to provide an oil tank for separating gas and liquid from each other at a position further downward or rearward than the crankshaft CS, and the oil OL is collected and supplied at a position further downward than the crankshaft CS. Therefore, an outer diameter of the rear wheel 8 can be more largely set while a distance between the crankshaft CS and the rear wheel 8 is reduced. Further, an increase in dimension of the unit-swing type engine 6 in the top-and-bottom direction V can be inhibited.

As a result, the oil can be sufficiently supplied to the inside of the unit-swing type engine 6, and the compact unit-swing type engine 6 can be realized.
(2) Further, in the above-mentioned configuration, the right flow path space 610 and the left flow path space 620 are arranged in the width direction H with the partition wall 310 interposed therebetween. In this case, the flow of the oil OL between the right flow path space 610 and the left flow path space 620 is unlikely to be affected by the inclination of the motorcycle 100 in the width direction H. Therefore, the flow of the oil OL in the oil flow path is stabilized regardless of the travel condition of the motorcycle 100.
(3) The scavenge pump SP is arranged at a position further downward than the crankshaft CS in the vehicle side view. Thus, the oil OL that flows below the crankshaft CS in the crank chamber CR can be more easily collected by the scavenge pump SP.
(4) As shown in Figs. 4, 7 and 8, the guide flow path 450 that guides the oil OL in the crank chamber CR to the scavenge pump SP is located at a position further downward than the crank chamber CR to overlap with the crank chamber CR in the plan view of the vehicle.
   In this case, because the guide flow path 450 is not located at a position further rearward than the crank chamber CR, the outer diameter of the rear wheel 8 can be more largely set while the distance between the crankshaft CS and the rear wheel 8 is reduced.
(5) As shown in Figs. 4 and 6, the guide passage 350 that guides the oil OL in the right flow path chamber RR3 to the oil inlet port of the feed pump FP, and its passage opening 351 are located at positions further downward than the crank chamber CR to overlap with the crank chamber CR in the plan view of the vehicle.

In this case, because the guide passage 350 and its passage opening 351 are not located at positions further rearward than the crank chamber CR, the outer diameter of the rear wheel 8 can be more largely set while the distance between the crankshaft CS and the rear wheel 8 is reduced.

### [8] Other Embodiments

(1) In the above-mentioned embodiment, the number of the communication holes 311 that connect the right flow path chamber RR1 and the left flow path chamber RL1 to each other is three, and the number of the communication holes 311 that connects the right flow path chamber RR2 and the left flow path chamber RL2 to each other is one.
   Alternatively, the number of the communication holes 311 that connect the right flow path chamber RR1 and the left flow path chamber RL1 to each other may be one or two, or may be four or more. Further, the number of the communication holes 311 that connect the right flow path chamber RR2 and the left flow path chamber RL2 to each other may be two or more.
(2) In the above-mentioned embodiment, the number of the right flow path chambers RR1, RR2, RR3 formed in the right flow path space 610 is three, and the number of the left flow path chambers RL1, RL2 formed in the left flow path space 620 is two. Alternatively, the number of the right flow path chambers formed in the right flow path space 610 may be one or two, or may be four or more. Further, the number of the left flow path chambers formed in the left flow path space 620 may be one, or three or more. In this case, the larger the number of the flow path chambers formed in each of the right flow path spaces 610, 620 is, the larger the length of the oil flow path from the scavenge pump SP to the feed pump FP can be.
(3) In at least part of the right flow path chambers RR1, RR2, RR3 and the left flow path chambers RL1, RL2, a rib that reinforces the flow path chamber and restricts the flow of the oil OL in the flow path chamber may be formed. In this case, in the flow path chamber provided with the rib, the length of the oil flow path is more sufficiently increased. Therefore, the length of the oil flow path from the scavenge pump SP to the feed pump FP can be further increased.
(4) The water pump WP is driven by the drive shaft D2 that is integrally provided with the drive shaft D1 of the scavenge pump SP and the feed pump FP in the above-mentioned embodiment. Alternately, the drive shaft D2 of the water pump WP may be provided at a position separated from the drive shaft D1, and a transmission path for the rotational force may be provided between the drive shaft D2 and the crankshaft CS. In this case, it is not necessary to provide the water pump WP to overlap with the scavenge pump SP and the feed pump FP in the vehicle side view. Therefore, the flexibility in layout of the water pump WP is improved.
   An air-cooling type may be employed as a cooling system of the unit-swing type engine 6. In this case, the water pump WP is not provided in the unit-swing type engine 6.
(5) The above-mentioned embodiment is an example in which the present teaching is applied to the motorcycle. The present teaching may be applied to another vehicle such as a four-wheeled automobile, a motor tricycle, an ATV (All Terrain Vehicle) or the like.
(6) In the above-mentioned embodiment, with the rear wheel 8 as the center, the silencer 73 is arranged at the right, and the rear half portion of the crankcase 61 and the belt-type Continuously Variable Transmission TR are provided at the left. Alternatively, the above-mentioned unit-swing type engine 6 may have a configuration in which the above-mentioned positions are reversed with respect to a vertical plane that is orthogonal to the width direction H and passes through the center of the motorcycle 100. In this case, with the rear wheel 8 as the center, the silencer 73 is arranged at the left, and the rear half portion of the crankcase 61 and the belt-type Continuously Variable Transmission TR are provided at the right. Even in such a configuration, the effects similar to the effects of the above-mentioned embodiment can be acquired.

### [9] Correspondences between Constituent Elements in Claims and Parts in Preferred Embodiments

In the following paragraphs, examples of correspondences between various elements recited in the claims below and those described above with respect to various preferred embodiments are explained.

In the above-mentioned embodiment, the body frame 1 is an example of a body frame, the rear wheel 8 is an example of a rear wheel, the unit-swing type engine 6 is an example of a unit-swing type engine, the crankshaft CS is an example of a crankshaft, the crankcase 61 is an example of a crankcase, the scavenge pump SP is an example of a scavenge pump, and the feed pump FP is an example of a feed pump.

Further, the oil flow path formed by the right flow path chambers RR1, RR2, RR3, the left flow path chambers RL1, RL2, the plurality of communication holes 311 and the plurality of holes 36H, 331 is an example of an oil flow path, the front half portion of the crankcase 61 is an example of a flow path forming portion, the flow path space 600 is an example of a space located at a position further downward than the crankshaft, the right flow path space 610 is an example of a first flow path space, the left flow path space 620 is an example of a second flow path space, the partition wall 310 is an example of a partition wall, and the communication hole 311 is an example of a communication hole.

Further, the guide flow path 450 is an example of a first guide flow path, the guide surfaces 361, 461 are examples of a guide surface, the strainer ST provided at the opening 462 of the left crank chamber case 400 is an example of a strainer, the splash portion 343 is an example of a splash portion, the right flow path chambers RR1, RR2, RR3 are examples of a plurality of first flow path chambers, and the left flow path chambers RL1, RL2 are examples of a plurality of second flow path chambers.

Further, the upper partition portion 230 and the lower partition portion 240 of the generator cover 200 and the upper partition portion 330 of the right crank chamber case 300 are examples of a first partition portion, the partition portion 335 of the right crank chamber case 300 is an example of a second partition portion, the hole 331 is an example of a first hole, the hole 36H is an example of a second hole, and the communication hole 311 is an example of a third hole.

Further, the guide passage 350 is an example of a second guide flow path, the passage opening 351 of the guide passage 350 is an example of an upstream end of a second guide flow path, the water pump WP is an example of a cooling pump, and the configuration in which the driver shaft D1 and the drive shaft D2 are integrally connected to each other is an example of a common drive shaft.

### INDUSTRIAL APPLICABILITY

The present invention can be effectively utilized for various types of straddled vehicles including engines.

## Claims

1. A straddled vehicle comprising:
a body frame (1);
a rear wheel (8); and
a unit-swing type engine (6) supported at the body frame (1) to be swingable in a vehicle top-and-bottom direction (V) together with the rear wheel (8), wherein
the unit-swing type engine (6) includes
a crankcase (61) that stores a crankshaft (CS) in a crank chamber (CR),
a scavenge pump (SP) for collecting oil (OL) in the crank chamber (CR) such that an inside of the crank chamber (CR) of the crankcase (61) has a negative pressure, and a feed pump (FP) for supplying the oil (OL) collected by the scavenge pump (SP) to the crankshaft (CS),
the scavenge pump (SP) and the feed pump (FP) are arranged in the crankcase (61),
the rear wheel (8) is provided at a position further rearward than the crankshaft (CS) in a vehicle front-and-rear direction (L),
the crankcase (61) includes a flow path forming portion that forms an oil flow path for leading the oil (OL) discharged from an oil discharge port of the scavenge pump (SP) to an oil inlet port of the feed pump (FP),
the flow path forming portion includes a partition wall (310) that sections a space (600) located at a position further downward than the crankshaft (CS) into a first flow path space (610) and a second flow path space (620) and is provided at a position further downward than the crankshaft (CS),
the partition wall (310) is formed such that the first flow path space (610) and the second flow path space (620) are arranged in a vehicle width direction (H),
at least one communication hole (311) that form part of the oil flow path is provided in the partition wall (310), a first guide flow path (450) for guiding oil (OL) in the crank chamber (CR) to an oil inlet port of the scavenge pump (SP) is provided in the flow path forming portion and
the first guide flow path (450) is formed such that the size of the cross section of the first guide flow path (450) is gradually reduced from an upstream position to a downstream position.

2. A straddled vehicle according to claim 1, wherein a plurality of communication holes (311) that form part of the oil flow path are provided in the partition wall (310).

3. A straddled vehicle according to claim 1 or 2, wherein the scavenge pump (SP) is arranged at a position further downward than the crankshaft (CS) in a vehicle side view.

4. A straddled vehicle according to at least one of the claims 1 to 3, wherein the first guide flow path (450) is provided in the flow path forming portion,
a guide surface (361,461), at a position further downward than the crankshaft (CS), for guiding the oil (OL) in the crank chamber (CR) to the first guide flow path (450) is provided in the crankcase (61), and
the guide surface (361,461) is formed to incline in a cross section orthogonal to the vehicle width direction (H).

5. A straddled vehicle according to claim 4, wherein the first guide flow path (450) is located at a position further downward than the crank chamber (CR) to overlap with the crank chamber (CR) in a plan view of the vehicle.

6. A straddled vehicle according to claim 4 or 5, wherein the flow path forming portion further includes a flat plate-shaped strainer (ST) arranged at a boundary between the crank chamber (CR) and the first guide flow path (450).

7. A straddled vehicle according to any one of claims 1 to 6, wherein the flow path forming portion includes a splash portion (343) for splashing and/or dropping the oil (OL) discharged from the scavenge pump (SP).

8. A straddled vehicle according to any one of claims 1 to 7, wherein the first flow path space (610) includes a plurality of first flow path chambers (RR1, RR2, RR3),
the second flow path space (620) includes a plurality of second flow path chambers (RL1, RL2), and
the oil flow path is formed to connect the plurality of first flow path chambers (RR1, RR2, RR3) and the plurality of second flow path chambers (RL1, RL2) to one another.

9. A straddled vehicle according to claim 8, wherein the flow path forming portion further includes
at least one first partition portion (230,240,330) that section an inside of the first flow path space (610) into the plurality of first flow path chambers (RR1, RR2, RR3), and
at least one second partition portion (335) that section an inside of the second flow path space (620) into the plurality of second flow path chambers (RL1, RL2),
at least one first hole (331) that connects at least part of the plurality of first flow path chambers (RR1, RR2, RR3) to one another is formed in at least part of the first partition portion (230,240,330),
at least one second hole (36H) that connects at least part of the plurality of second flow path chambers (RL1, RL2) to one another is formed in at least part of the second partition portion (335),
at least one communication hole (311) include at least one third hole (311) that connects at least part of the first flow path chambers (RR1, RR2, RR3) and at least part of the second flow path chambers (RL1, RL2) to each other, and
the oil flow path is formed by the plurality of first flow path chambers (RR1, RR2, RR3), the plurality of second flow path chambers (RL1, RL2), the first hole (331), the second hole (36H) and the third hole (311).

10. A straddled vehicle according to claim 9, wherein the flow path forming portion further includes
a plurality of first partition portions (230,240,330) that section an inside of the first flow path space (610) into the plurality of first flow path chambers (RR1, RR2, RR3), and/or a plurality of second partition portions (335) that section an inside of the second flow path space (620) into the plurality of second flow path chambers (RL1, RL2).

11. A straddled vehicle according to any one of claims 1 to 10, wherein a second guide flow path (350) for guiding oil (OL) that has flown between the first flow path space (610) and the second flow path space (620) through at least one communication hole (311) to an oil inlet port of the feed pump (FP) is further provided in the flow path forming portion, and an upstream end (351) of the second guide flow path (350) is located at a position further downward than the crank chamber (CR) to overlap with the crank chamber (CR) in a plan view of the vehicle.

12. A straddled vehicle according to any one of claims 1 to 11, wherein the unit-swing type engine (6) further includes a cooling pump (WP), and
the scavenge pump (SP), the feed pump (FP) and the cooling pump (WP) are provided to overlap with one another in a vehicle side view and are provided to be driven by a common drive shaft (D1,D2) that is provided to be rotated by a rotational force of the crankshaft (CS).

## Patentansprüche

1. Ein Spreiz-Sitz-Fahrzeug, das umfasst:
einen Körper-Rahmen (1);
ein Hinter-Rad (8) und
einen Einheit-Schwing-Typ-Motor (6), der an dem Körper-Rahmen (1) gelagert ist, um in einer Fahrzeug-Oben-und-Unten-Richtung (V) zusammen mit dem Hinter-Rad (8) schwingbar zu sein, wobei
der Einheit-Schwing-Typ-Motor (6) beinhaltet
ein Kurbel-Gehäuse (61), das eine Kurbel-Welle (CS) in einer Kurbel-Kammer (CR) lagert,
eine Rück-Förder-Pumpe (SP), um Öl (OL) in der Kurbel-Kammer (C3) zu sammeln, so dass ein Innen-Raum von der Kurbel-Kammer (CR) in dem Kurbel-Gehäuse (61) einen Negativ-Druck hat, und
eine Zuführ-Pumpe (FP), um das Öl (OL), gesammelt durch die Rück-Förder-Pumpe (SP), zu der Kurbel-Welle (CS) zuzuführen,
die Rück-Förder-Pumpe (SP) und die Zuführ-Pumpe (FP) sind in dem Kurbel-Gehäuse (61) angeordnet,
das Hinter-Rad (8) ist an einer Position weiter hinten als die Kurbel-Welle (CS) in einer Fahrzeug-Vorder-und-Rück-Richtung (L) positioniert,
das Kurbel-Gehäuse (61) beinhaltet einen Strömungs-Pfad-Ausbildungs-Abschnitt, der einen ÖI-Strömungs-Pfad bildet, um das Öl (OL), abgegeben von einem Öl-Abgabe-Anschluss von der Rück-Förder-Pumpe (SP) zu einem Öl-Einlass-Anschluss von der Zuführ-Pumpe (FP) zu führen,
der Strömungs-Pfad-Ausbildungs-Abschnitt beinhaltet eine Unterteilungs-Wand (310) die einen Raum (600), der an einer Position weiter unten als die Kurbel-Welle (CS) angeordnet ist, in einen ersten Strömungs-Pfad-Raum (610) und einen zweiten Strömungs-Pfad-Raum (620) unterteilt, und ist an einer Position weiter unten als die Kurbel-Welle (CS) vorgesehen,
die Unterteilungs-Wand (310) ist ausgebildet, so dass der erste Strömungs-Pfad-Raum (610) und die zweite Strömungs-Pfad-Raum (620) in einer Fahrzeug-Breiten-Richtung (H) angeordnet sind,
zumindest ein Kommunikations-Loch (311), das einen Teil von dem ÖI-Strömungs-Pfad bildet, ist in der Unterteilungs-Wand (310) vorgesehen, ein erster Führungs-Strömungs-Pfad (450) zum Führen von Öl (OL) in der Kurbel-Kammer (CR) zu einem Öl-Einlass-Anschluss von der Rück-Förder-Pumpe (SP) ist in dem Strömungs-Pfad-Ausbildungs-Abschnitt vorgesehen, und der erste Führungs-Strömungs-Pfad (450) ist ausgebildet, so dass die Größe des Querschnitts von dem ersten Führungs-Strömungs-Pfad (450) graduell verringert ist von einer Strom-Auf-Position zu einer Strom-Ab-Position.

2. Ein Spreiz-Sitz-Fahrzeug gemäß Anspruch 1, wobei eine Mehrzahl von Kommunikations-Löchern (311), die Teil von dem ÖI-Strömungs-Pfad bilden, in der Unterteilungs-Wand (310) vorgesehen sind.

3. Ein Spreiz-Sitz-Fahrzeug gemäß Anspruch 1 oder 2, wobei die Rück-Förder-Pumpe (SP) an einer Position weiter unten als die Kurbel-Welle (CS) in einer FahrzeugSeiten-Ansicht angeordnet ist.

4. Ein Spreiz-Sitz-Fahrzeug gemäß zumindest einem von den Ansprüchen 1 bis 3, wobei der erste Führungs-Strömungs-Pfad (450) in dem Strömungs-Pfad-Ausbildungs-Abschnitt vorgesehen ist,
eine Führungs-Fläche (361, 461) an einer Position weiter unten als die Kurbel-Welle (CS) in dem Kurbel-Gehäuse (61) vorgesehen ist, zum Führen des Öls (OL) in der Kurbel-Kammer (CR) zu dem ersten Führungs-Strömungs-Pfad (450), und
die Führungs-Fläche (361, 461) ausgebildet ist, um in einem Querschnitt geneigt zu sein, orthogonal zu der Fahrzeug-Breiten-Richtung (H).

5. Ein Spreiz-Sitz-Fahrzeug gemäß Anspruch 4, wobei der erste Führungs-Strömungs-Pfad (450) an einer Position weiter unten als die Kurbel-Welle (CR) angeordnet ist, um mit der Kurbel-Kammer (CR) in einer Draufsicht von dem Fahrzeug zu überlappen.

6. Ein Spreiz-Sitz-Fahrzeug gemäß Anspruch 4 oder 5, wobei der Strömungs-Pfad-Ausbildungs-Abschnitt weiter einen flachen plattenförmigen Sieb-Filter (SC) beinhaltet, der an einer Grenze zwischen der Kurbel-Kammer (CR) und dem ersten Führungs-Strömungs-Pfad (450) angeordnet ist.

7. Ein Spreiz-Sitz-Fahrzeug gemäß zu irgendeinem der Ansprüche 1 bis 6, wobei der Strömungs-Pfad-Ausbildungs-Abschnitt einen Spritz-Abschnitt (343) beinhaltet, zum Spritzen und/oder Abtropfen des Öls (OL), das von der Rück-Förder-Pumpe (SP) abgegeben ist.

8. Ein Spreiz-Sitz-Fahrzeug gemäß zu irgendeinem der Ansprüche 1 bis 7, wobei der erste Strömungs-Pfad-Raum (610) eine Mehrzahl von ersten Strömungs-Pfad-Kammern (RR1, RR2, RR3) beinhaltet,
der zweite Strömungs-Pfad-Raum (620) eine Mehrzahl von zweiten Strömungs-Pfad-Kammern (RL1, RL2) beinhaltet, und
der ÖI-Strömungs-Pfad ausgebildet ist, um die Mehrzahl von ersten Strömungs-Pfad-Kammern (RR1, RR2, RR3) und die Mehrzahl von zweiten Strömungs-Pfad-Kammern (RL1, RL2) miteinander zu verbinden.

9. Ein Spreiz-Sitz-Fahrzeug gemäß Anspruch 8, wobei der Strömungs-Pfad-Ausbildungs-Abschnitt weiter beinhaltet
zumindest einen ersten Unterteilungs-Abschnitt (230, 240, 330), der einen Innen-Raum von dem ersten Strömungs-Pfad-Raum (610) in eine Mehrzahl von ersten Strömungs-Pfad-Kammern (RR1, RR2, RR3) unterteilt, und
zumindest einen zweiten Unterteilungs-Abschnitt (335), der einen Innen-Raum von dem zweiten Strömungs-Pfad-Raum (620) in die Mehrzahl von zweiten Strömungs-Pfad-Kammern (RL1, RL2) unterteilt,
zumindest ein erstes Loch (331), das zumindest einen Teil von der Mehrzahl der ersten Strömungs-Pfad-Kammern (RR1, RR2, RR3) miteinander verbindet, ist zumindest in einem Teil von dem ersten Unterteilungs-Abschnitt (230, 240, 330) ausgebildet,
zumindest ein zweites Loch (36H), das zumindest einen Teil von der Mehrzahl der zweiten Strömungs-Pfad-Kammern (RL1, RL2) miteinander verbindet, ist in zumindest einem Teil von dem zweiten Unterteilungs-Abschnitt (335) ausgebildet, zumindest ein Kommunikations-Loch (311) beinhaltet zumindest ein drittes Loch (311), das zumindest einen Teil von den ersten Strömungs-Pfad-Kammern (RR1, RR2, RR3) und zumindest einen Teil von den zweiten Strömungs-Pfad-Kammern (RL1, RL2) miteinander verbindet, und
der Öl-Strömungs-Pfad durch die Mehrzahl von ersten Strömungs-Pfad-Kammern (RR1, RR2, RR3), die Mehrzahl von zweiten Strömungs-Pfad-Kammern (RL1, RL2), dem ersten Loch (331), dem zweiten Loch (36H) und dem dritten Loch (311) ausgebildet ist.

10. Ein Spreiz-Sitz-Fahrzeug gemäß Anspruch 9, wobei der Strömungs-Pfad-Ausbildungs-Abschnitt weiter beinhaltet
eine Mehrzahl von ersten Unterteilungs-Abschnitten (230, 240, 330), die einen Innen-Raum von dem ersten Strömungs-Pfad-Raum (610) in die Mehrzahl von ersten Strömungs-Pfad-Kammern (RR1, RR2, RR3) unterteilt, und/oder eine Mehrzahl von zweiten Unterteilungs-Abschnitten (335), die einen Innen-Raum von dem zweiten Strömungs-Pfad-Raum (620) in die Mehrzahl von zweiten Strömungs-Pfad-Kammern (RL1, RL2) unterteilt.

11. Ein Spreiz-Sitz-Fahrzeug gemäß zu irgendeinem der Ansprüche 1 bis 10, wobei der zweite Führungs-Strömungs-Pfad (350) zum Führen von Öl, das zwischen dem ersten Strömungs-Pfad-Raum (610) und dem zweiten Strömungs-Pfad-Raum (620) durch zumindest ein Kommunikations-Loch (311) zu einem Öl-Einlass-Anschluss von der Zuführ-Pumpe (FP) geströmt ist, weiterhin in dem Strömungs-Pfad-Ausbildungs-Abschnitt vorgesehen ist, und ein Strom-Auf-Ende (351) von dem zweiten Führungs-Strömungs-Pfad (350) an einer Position weiter unten als die Kurbel-Welle (CR) angeordnet ist, um mit der Kurbel-Welle (CR) in einer Draufsicht von dem Fahrzeug zu überlappen.

12. Ein Spreiz-Sitz-Fahrzeug gemäß zu irgendeinem der Ansprüche 1 bis 11, wobei der Einheit-Schwing-Typ-Motor (6) weiter eine Kühl-Pumpe (WP) beinhaltet, und
die Rück-Förder-Pumpe (SP), die Zuführ-Pumpe (FP) und die Kühl-Pumpe (WP) vorgesehen sind, um in einer Seiten-Ansicht miteinander zu überlappen, und vorgesehen sind, um durch eine gemeinsame Antriebs-Welle (D1, D2), die vorgesehen ist, um durch eine Dreh-Kraft von der Kurbel-Welle (CF) gedreht zu werden, angetrieben zu werden.

## Revendications

1. Véhicule à enfourcher comprenant:
un cadre de carrosserie (1);
une roue arrière (8); et
un moteur à balancier (6) supporté sur le châssis de carrosserie (1) de manière à pivoter dans la direction supérieure et inférieure (V) du véhicule avec la roue arrière (8), dans lequel le moteur à balancier (6) comprend
un carter de vilebrequin (61) qui stocke un vilebrequin (CS) dans une chambre de vilebrequin (CR), une pompe de récupération (SP) pour collecter l'huile (OL) dans la chambre de vilebrequin (CR) de sorte qu'un intérieur de la chambre de vilebrequin (CR) du carter (61) présente une pression négative, et une pompe de transport (FP) pour fournir l'huile (OL) collectée par la pompe de récupération (SP) au vilebrequin (CS),
la pompe de balayage (SP) et la pompe d'alimentation (FP) sont disposées dans le carter (61), la roue arrière (8) est prévue dans une position plus en arrière que le vilebrequin (CS) dans la direction avant et arrière (L) du véhicule,
le carter (61) comprend une partie formant un trajet d'écoulement qui forme un trajet d'écoulement d'huile pour conduire l'huile (OL) déchargée depuis un orifice de décharge d'huile de la pompe de récupération (SP) vers un orifice d'entrée d'huile de la pompe d'alimentation (FP),
la partie de formation de trajet d'écoulement comprend une paroi de séparation (310) qui sectionne un espace (600) situé à une position plus vers le bas que le vilebrequin (CS) dans un premier espace de trajet d'écoulement (610) et un deuxième espace de trajet d'écoulement (620) et est fournie à une position plus bas que le vilebrequin (CS),
la paroi de séparation (310) est formée de telle sorte que le premier espace de trajet d'écoulement (610) et le deuxième espace de trajet d'écoulement (620) sont agencés dans une direction de largeur de véhicule (H), au moins un trou de communication (311) qui fait partie du trajet d'écoulement de l'huile est prévu dans la paroi de séparation (310), un premier trajet de guidage (450) pour guider l'huile (OL) dans la chambre (CR) du maneton vers une entrée d'huile de la pompe (SP) du collecteur est prévu dans la partie formant trajet de flux et
le premier trajet d'écoulement de guidage (450) est formé de telle sorte que la taille de la section transversale du premier trajet d'écoulement de guidage (450) est progressivement réduite d'une position amont à une position aval.

2. Véhicule à enfourcher selon la revendication 1, dans lequel une pluralité de trous de communication (311) qui font partie du trajet d'écoulement de l'huile sont prévus dans la paroi de séparation (310).

3. Véhicule à enfourcher selon les revendications 1 ou 2, dans lequel la pompe de récupération (SP) est disposée plus bas que le vilebrequin (CS) dans une vue latérale du véhicule.

4. Véhicule à enfourcher selon au moins l'une des revendications 1 à 3, dans lequel le premier trajet d'écoulement de guidage (450) est prévu dans la partie formant le trajet d'écoulement,
une surface de guidage (361, 461) est prévue dans le carter de vilebrequin (61) en une position plus basse que le vilebrequin (CS) pour guider l'huile (OL) dans la chambre de vilebrequin (CR) vers le premier trajet de guidage (450), et
la surface de guidage (361, 461) est formée de manière à s'incliner dans une section transversale orthogonale à la direction de largeur du véhicule (H).

5. Véhicule à enfourcher selon la revendication 4, dans lequel le premier trajet d'écoulement de guidage (450) est situé à une position plus bas que la chambre à manivelle (CR) pour chevaucher la chambre à manivelle (CR) dans une vue en plan du véhicule.

6. Véhicule à enfourcher selon les revendications 4 ou 5, dans lequel la partie formant le trajet d'écoulement comprend en outre une crépine plate en forme de plaque (ST) disposée à une limite entre la chambre à manivelle (CR) et le premier trajet d'écoulement de guidage (450).

7. Véhicule à enfourcher selon l'une quelconque des revendications 1 à 6, dans lequel la partie formant le trajet d'écoulement comprend une partie d'éclaboussure (343) pour éclabousser et/ou faire tomber l'huile (OL) déchargée de la pompe de récupération (SP).

8. Véhicule à enfourcher selon l'une quelconque des revendications 1 à 7, dans lequel le premier espace de trajet d'écoulement (610) comprend une pluralité de premières chambres de trajet d'écoulement (RR1, RR2, RR3),
le deuxième espace de trajet d'écoulement (620) comprend une pluralité de deuxièmes chambres de trajet d'écoulement (RL1, RL2), et
le trajet d'écoulement d'huile est formé pour connecter la pluralité de premières chambres de trajet d'écoulement (RR1, RR2, RR3) et la pluralité de deuxièmes chambres de trajet d'écoulement (RL1, RL2) les unes aux autres.

9. Véhicule à enfourcher selon la revendication 8, dans lequel la partie formant le trajet d'écoulement comprend en outre
au moins une première partie de séparation (230, 240, 330) qui sectionne une partie intérieure du premier espace de trajet d'écoulement (610) dans la pluralité de premières chambres de trajet d'écoulement (RR1, RR2, RR3), et au moins une deuxième partie de séparation (335) qui sectionne une partie intérieure du deuxième espace de trajet d'écoulement (620) dans la pluralité de deuxièmes chambres de trajet d'écoulement (RL1, RL2),
au moins un premier trou (331) qui relie au moins une partie de la pluralité de premières chambres de passage d'écoulement (RR1, RR2, RR3) les unes aux autres est formé dans au moins une partie de la première partie de séparation (230, 240, 330),
au moins un deuxième trou (36H) qui relie au moins une partie de la pluralité de deuxièmes chambres de trajet d'écoulement (RL1, RL2) les unes aux autres est formé dans au moins une partie de la deuxième partie de séparation (335),
au moins un trou de communication (311) comprend au moins un troisième trou (311) qui relie au moins une partie des premières chambres (RR1, RR2, RR3) et au moins une partie des deuxièmes chambres (RL1, RL2) de passage d'écoulement entre elles, et
le trajet d'écoulement d'huile est formé par la pluralité de premières chambres de trajet d'écoulement (RR1, RR2, RR3),
la pluralité de deuxièmes chambres de trajet d'écoulement (RL1, RL2), le premier trou (331), le deuxième trou (36H) et le troisième trou (311).

10. Véhicule à enfourcher selon la revendication 9, dans lequel la partie formant le trajet d'écoulement comprend en outre
une pluralité de premières parties de séparation (230, 240, 330) qui sectionnent une partie intérieure du premier espace de trajet d'écoulement (610) dans la pluralité de premières chambres de trajet d'écoulement (RR1, RR2, RR3), et/ou une pluralité de deuxièmes parties de séparation (335) qui sectionnent une partie intérieure du deuxième espace de trajet d'écoulement (620) dans la pluralité des deuxièmes chambres de trajet d'écoulement (RL1, RL2).

11. Véhicule à enfourcher selon l'une quelconque des revendications 1 à 10, dans lequel un deuxième trajet d'écoulement de guidage (350) pour guider l'huile (OL) qui s'est écoulé entre le premier espace de trajet d'écoulement (610) et le deuxième espace de trajet d'écoulement (620) à travers au moins un trou de communication (311) vers un orifice d'entrée d'huile de la pompe d'alimentation (FP) est en outre prévu dans la partie formant trajet d'écoulement, et
une extrémité amont (351) du deuxième trajet d'écoulement de guidage (350) est située à une position plus bas que la chambre à manivelle (CR) pour chevaucher la chambre à manivelle (CR) dans une vue en plan du véhicule.

12. Véhicule à enfourcher selon l'une quelconque des revendications 1 à 11, dans lequel le moteur du type à balancier (6) comprend en outre une pompe de refroidissement (WP), et
la pompe de récupération (SP), la pompe d'alimentation (FP) et la pompe de refroidissement (WP) sont prévues pour se chevaucher l'une l'autre dans une vue latérale du véhicule et sont prévues pour être entraînées par un arbre de transmission commun (D1.D2) qui est prévu pour être tourné par une force rotative du vilebrequin (CS).
